# EUROPEAN PATENT SPECIFICATION

(11) **EP 3 179 672 B1**
(45) Date of publication and mention of the grant of the patent: **01.05.2019**
(21) Application number: 15829683.0
(22) Date of filing: 20.03.2015
(51) Int. Cl.: H04L 12/24, H04L 12/26, H04L 12/12, H04L 12/46

(54) **METHOD AND APPARATUS FOR REDUCING POWER CONSUMPTION OF NETWORK ACCESS DEVICE**
VERFAHREN UND VORRICHTUNG ZUR REDUZIERUNG DES STROMVERBRAUCHS EINER NETZWERKZUGRIFFSVORRICHTUNG
PROCÉDÉ ET APPAREIL POUR RÉDUIRE LA CONSOMMATION ÉLECTRIQUE D'UN DISPOSITIF D'ACCÈS RÉSEAU

(30) Priority: 04.08.2014 CN 201410380485
(43) Date of publication of application: 14.06.2017
(73) Proprietor: ZTE Corporation, Shenzhen, Guangdong 518057 (CN)
(72) Inventor: MA, Jian, Shenzhen Guangdong 518057 (CN)
(74) Representative: Savi, Massimiliano
(86) International application number: PCT/CN2015/074781
(87) International publication number: WO 2016/019731

(56) References cited:
- EP-A1- 2 506 497
- CN-A- 101 635 650
- CN-A- 102 790 685
- CN-A- 102 790 685
- US-A1- 2004 122 985
- US-B1- 8 340 111

## Description

### Technical Field

The present invention relates to the field of communication technologies in a broadband access network, especially aspects of DSL (Digital Subscriber Line) and PON (Passive optical network), and more particularly, to a method and apparatus for reducing power consumption of an access network device.

### Background

An access network device needs to run 24 hours per day uninterruptedly to provide users with uninterrupted Internet services. With the continuous expansion of network scale, the energy consumption of devices managed by the operator is also increasing. It is well known that, with rapid growth of our country's economy, the energy consumption is also growing, and the extensive increasing way in the past has been unable to support a sound and rapid economic development. The energy saving and emission reduction not only are in line with national policies, but also can reduce the routine maintenance costs of the operator.

The energy consumption of a device is closely related to the open status of user ports in the device. For convenience, the operator often opens all the user ports in the initial configuration, which is a big waste because actually not all the ports have services when the device works, and if ports without actual users in the device can be closed in time, the energy consumption for the device to operate can be greatly reduced, and the objective of energy saving and emission reduction can be achieved.

Typically, the broadband operator maintains a number allocation resource pool to save information of users that have been allocated with numbers. Theoretically, unused ports can be found out by comparing the number allocation source pool with the ports in the current network devices, but the operator's number allocation resource pool is usually not updated in time in actual operations and maintenance, so that it cannot fully reflect the actual service opening 16774PTEP_20180126_AMD pages 2,2a,3,4 clean
status at the ports. A large amount of human resources must be input to maintain the number allocation resource pool, find out the actual unused ports, and close them one by one. The operation and maintenance costs are very high.

The document US8340111B1 describes a network switch having reduced power consumption.

The document EP2506497A1 describes a method for reducing power consumption of a multiplexer-dispatcher device.

The document CN102790685A describes a network device having function for power saving.

### Summary

The present invention aims at providing a method and apparatus for reducing power consumption of an access network device, to solve the problem in the related art that a large amount of human resources need to be invested and operation and maintenance costs are very high.

The present invention provides a method according to claim 1, an apparatus according to claim 6, a computer program according to claim 11 and a computer-readable data carrier according to claim 12. Further improvements and embodiments are provided in the dependent claims.

Compared with the related art, the technical solution of the present invention has the following beneficial effects:
the technical solution of the present invention can automatically locate unused ports in an access device, generate a list of ports to be closed and close the ports in time, so as to reduce the energy consumption of the device, reduce the operator's operation and maintenance costs, and achieve the objective of energy saving and emission reduction.

### Brief Description of the Drawings

FIG. 1 is a flow chart of a method for reducing power consumption of an access network device in accordance with an embodiment of the present invention;
FIG. 2 is a schematic diagram of an apparatus for reducing power consumption of an access network device in accordance with an embodiment of the present invention;
FIG. 3 is a block diagram of reducing power consumption of an access network device in accordance with an embodiment of the present invention;
FIG. 4 is a flow chart of a method for automatically closing unused ports to reduce power consumption in accordance with an embodiment of the present invention.

### Detailed description

Hereinafter, in conjunction with the accompanying drawings, preferred embodiments of the present invention will be described in detail. It is to be understood that the preferred embodiments described hereinafter are for the purpose of illustration and explanation only and are not intended to limit the present invention.

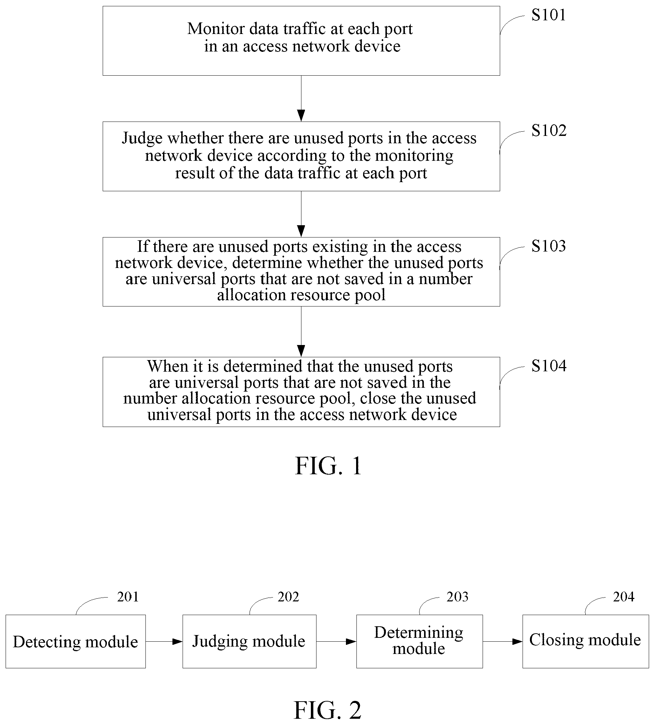

FIG. 1 illustrates a flow chart of the method for reducing power consumption of an access network device, and as shown in FIG. 1, the method includes the following steps.

In step S101, monitor data traffic at each port in the access network device.

In step S102, judge whether there are unused ports in the access network device according to the monitoring result of the data traffic at each port.

In step S103, if there are unused ports existing in the access network device, determine whether the unused ports are universal ports that are not saved in a number allocation resource pool.

In step S104: when it is determined that the unused ports are universal ports that are not saved in the number allocation resource pool, close the unused universal ports in the access network device.

Said detecting the data traffic at the ports in an access network device according to the embodiment of the present invention includes: detecting whether the ports in the access network device generate data traffic by collecting the number of input and output bytes at respective ports in the access network device in a preset period of time.

The step of judging whether the access network device has unused ports according to the monitoring result of the data traffic at the respective ports according to the embodiment of the present invention includes: judging whether the access network device has ports that do not generate data traffic; and if there are ports not generating data traffic, judging that the ports not generating data traffic are determined as unused ports, and judging that the access network device has unused ports; if there are no port that do not generate data traffic, judging that there are no unused ports in the access network device. For example, the object in the judgment is the ports in the device, for instance, a device has four ports: 1, 2, 3 and 4, herein port 2 has no traffic in a specified period of time, and the other ports have traffic, so that it can judge that the port 2 is an unused port, while the ports 1, 3 and 4 are used ports, and the energy saving is achieved by closing the unused port, such as the port 2 in the present embodiment.

Wherein, said closing unused universal ports in the access network device when it is determined that the unused ports are universal ports that are not saved in the number allocation resource pool includes: counting the determined unused universal ports, generating a list of ports to be closed; and closing the unused universal ports in the access network device according to the generated list of ports to be closed.

The embodiment of the present invention further includes: unused universal ports to be closed in the access network device are universal ports in the open status.

The embodiment of the present invention provides a computer program including program instructions which, when executed by a terminal, enable the terminal to perform any of the abovementioned method for reducing power consumption of the access network device.

The embodiment of the present invention provides a carrier carrying any of the abovementioned computer program.

FIG. 2 shows a schematic diagram of an apparatus for reducing power consumption of an access network device, and as shown in FIG. 2, it includes: detecting module 201, arranged to monitor data traffic at each port in the access network device; judging module 202, arranged to judge whether the access network device has unused ports according to the monitoring result of data traffic at each port; determining module 203, arranged to determine whether the unused ports are universal ports that are not saved in a number allocation resource pool if the access network device have unused ports; closing module 204, arranged to: close unused universal ports in the access network device when it is determined that the unused ports are universal ports that are not saved in the number allocation resource pool.

Herein, the detecting module 201 includes a detecting unit, arranged to: detect whether the ports in the access network device generate data traffic by collecting the number of input and output bytes at the ports in the access network device in a preset period of time.

The judging module 202 is arranged to judge whether the access network device has unused ports according to the monitoring result of data traffic at the ports as follows: judging whether there are ports that do not generate data traffic in the access network device, and if there are ports that do not generate data traffic, judge that the ports not generating data traffic are determined as unused ports, and the access network device has unused ports; if there are no ports that do not generate data traffic, judge that there are no unused ports in the access network device.

The closing module 204 includes a unit for generating a list of ports to be closed, arranged to collect determined unused universal ports and generate a list of ports to be closed; a closing unit, arranged to close the unused universal ports in the access network device according to the generated list of ports to be closed.

In the embodiment of the present invention, the unused universal ports that are closed in the access network device are universal ports in the open status.

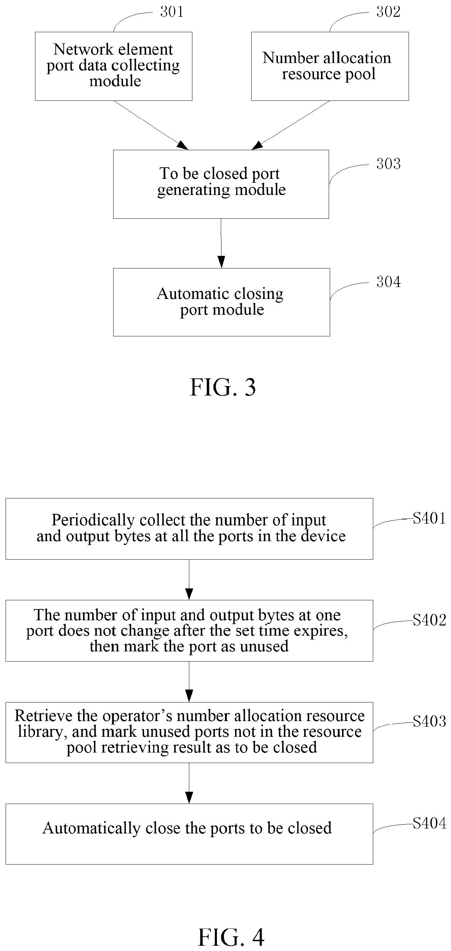

FIG. 3 shows a block diagram of reducing the power consumption of an access network device according to an embodiment of the present invention, and as shown in FIG. 3, it includes network element port data collecting module 301, number allocation resource pool 302, to be closed port generating module 303, and automatic closing port module 304. Wherein, the network element port data collecting module 301 is responsible for collecting the port information of the network element device, recording the number of input and output bytes at the ports, and marking the usage status of the ports. That is, the network element port data collecting module 301 is arranged to periodically collect the number of input and output bytes at the ports in the access device according to the sampling period and compare it with the result collected at the last time, and if there is a change, update the sampling time point at this time, and mark the ports as in use; if data collected at the ports do not change in the preset period of time, mark the ports as in unused state. The number allocation resource pool 302: the number allocation resource pool is maintained by the operator and saves the user information in the device. That is to say, the number allocation resource pool 302 is arranged to: ports recorded in the number allocation resource pool are determined to be allocated with numbers, and are not allowed to be closed even if they do not have traffic, so that it needs to retrieve the operator's number allocation resource pool before closing the ports. The to be closed port generating module 303 generates a list of ports to be closed according to the port usage status and the port open status collected by the network element port data collecting module and by combining with the number allocation resource pool. That is, the to be closed port generating module 303 is arranged to: extract the usage status and the open status of the ports from the network element port data collecting module 301, and then combine with the number allocation resource pool 302 to generate a list of ports to be closed. The list of ports to be closed can be submitted to the operation and maintenance personnel at the operator side in the way of report in order to view and confirm. The automatic closing port module 304 closes the ports according to the result of the to be closed port generating module. That is, the automatic closing port module 304 obtains the generated list of ports to be closed from the to be closed port generating module 303, and automatically closes the ports in the device according to the port records in the list to achieve the objective of energy saving and emission reduction.

In the embodiment of the present invention, a port is determined to be a port to be closed only when it satisfies the following conditions:
1, the port is marked as in unused status;
2, the port is in the open status;
3, the port cannot be retrieved in the number allocation resource pool 302.

Wherein, the automatic closing port module 304 records the operation log in detail when closing the ports and supports the rollback in order to prevent erroneous operations.

In the PON networking scenario, the access device is an ONU (optical network unit). In the non-PON networking scenario, the access device is a DSLAM (Digital Subscriber Line Access Multiplexer) and MSAN (Multi-Service Access Network).

FIG. 4 shows the method for automatically closing unused ports to reduce power consumption provided in the embodiment of the present invention, and the method determines the port usage status by detecting whether there is traffic at user ports in an access device. When a user port is used, the port will inevitably generate traffic, thereby changing the number of input and output bytes at the port, therefore, by judging whether the number of input and output bytes at the port changes in two consecutive collections, it can judge whether the port has traffic. The method includes the following steps.

In step S401, periodically collect the number of input and output bytes at all the ports in the device.

It is to collect the port information of the network element device and record the number of input and output bytes at the ports.

In step S402, the number of input and output bytes at one port does not change after the set time expires, then it is to mark the port as unused.

The number of input and output bytes at the ports in the access device is periodically collected according to the sampling period and is compared with the result of the last collection. If there is a change, the sampling time point is updated at this time and the port is marked as in use. If the data collected at the port do not change after the preset period of time expires, the port is marked as unused.

In step S403, retrieve the operator's number allocation resource library, and mark unused ports not in the resource pool retrieving result as to be closed.

The ports recorded in the number allocation resource pool are determined as number allocated, and even if there is no traffic, the ports are not allowed to be closed, so it needs to retrieve the operator's number allocation resource pool before closing the ports.

In step S404: automatically close the ports to be closed.

It is to close the ports to be closed, and record the closed port in a log after the ports to be closed are closed, and rollback is supported.

The list of ports to be closed is generated by extracting usage status and the open status of the ports from the network element port data collecting module 301, with combination of the number allocation resource pool 302, and the ports in the device are automatically closed according to the port record in the list of ports to be closed.

The embodiment of the present invention provides a computer program comprising program instructions which, when executed by a terminal, enable the terminal to perform any of the abovementioned methods for reducing power consumption by automatically closing unused ports as shown in FIG. 4.

An embodiment of the present invention provides a carrier carrying any of the abovementioned computer program.

As described above, the embodiments of the present invention have the following technical effects:
the embodiment of the present invention locates and closes unused user ports by analyzing data at ports in an access device, which has high accuracy rate in judging the unused status of the ports, reduces the energy consumption of the device and does not need human intervention, and has low operation and maintenance costs.

Although the present invention has been described in detail hereinabove, the present invention is not limited thereto, and those skilled in the art can make various modifications in accordance with the principles of the present invention. Thus, any modifications made in accordance with the principles of the present invention should be understood as falling within the protection scope of the present invention.

### Industrial Applicability

The abovementioned technical solution can automatically locate unused ports in an access device, generate a list of ports to be closed and close the ports in time, so as to reduce the energy consumption of the device, reduce the operator's operation and maintenance costs, and simultaneously achieve the objective of energy saving and emission reduction. Therefore, the present invention has very strong industrial applicability.

## Claims

1. A method for reducing power consumption of an access network device, comprising following steps:
monitoring (S101, S401) data traffic at ports in the access network device;
judging (SI02, S402) whether there are unused ports existing in the access network device according to a result of monitoring the data traffic at the ports;
determining (S103, S403) if the unused ports are universal ports that are not saved in a number allocation resource pool (302) if the access network device has the unused ports;
when it is determined that the unused ports are universal ports that are not saved in the number allocation resource pool, closing (S104, S404) the unused universal ports in the access network device.

2. The method for reducing power consumption of an access network device of claim 1, wherein, the step of monitoring the data traffic at the ports in the access network device comprises:
detecting (S402) whether there is data traffic generated at ports in the access network device by collecting (S401) a number of input and output bytes at the ports in the access network device in a preset period of time.

3. The method for reducing power consumption of an access network device of claim 2, wherein, the step of judging whether the access network device has unused ports according to a result of monitoring the data traffic at the ports comprises:
judging whether the access network device has ports that do not generate data traffic; and if there are ports not generating data traffic, judging that the ports not generating data traffic are determined as unused ports, and judging that the access network device has unused ports; if there are no ports that do not generate data traffic, judging that there are no unused ports in the access network device.

4. The method for reducing power consumption of an access network device of claim 3, wherein, the step of closing unused universal ports in the access network device when it is determined that the unused ports are universal ports that are not saved in the number allocation
counting the determined unused universal ports, and generating a list of ports to be closed (S403);
closing the unused universal ports in the access network device according to the generated list of ports to be closed (S404).

5. The method for reducing power consumption of an access network device of any one of claims 1 to 4, wherein, the step of closing the unused universal ports in the access network device comprises:
closing the unused universal ports in an open status in the access network device.

6. An apparatus for reducing power consumption of an access network device, comprising a detecting module (201), a judging module (202), a determining module (203) and a closing module (204), wherein:
the detecting module is arranged to monitor data traffic at ports in the access network device;
the judging module is arranged to judge whether the access network device has unused ports according to a result of monitoring data traffic at the ports;
the determining module is arranged to judge whether the unused ports are universal ports that are not saved in a number allocation resource pool (302) if the access network device has the unused ports;
the closing module is arranged to close the unused universal ports in the access network device when it is determined that the unused ports are universal ports that are not saved in the number allocation resource pool.

7. The apparatus for reducing power consumption of an access network device of claim 6, wherein, the detecting module comprises a detecting unit, wherein:
the detecting unit is arranged to detect whether the ports in the access network device generate data traffic by collecting a number of input and output bytes at the ports in the access network device in a preset period of time.

8. The apparatus for reducing power consumption of an access network device of claim 7, wherein, the judging module is arranged to judge whether the access network device has unused ports according to the monitoring result of data traffic at the ports as follows:
judging whether there are ports that do not generate data traffic in the ports of the access network device, and if there are ports that do not generate data traffic, judging that the ports not generating data traffic are determined as unused ports, and the access network device has unused ports; if there are no ports that do not generate data traffic, judging that there are no unused ports in the access network device.

9. The apparatus for reducing power consumption of an access network device of claim 8, wherein, the closing module comprises a unit for generating a list of ports to be closed and a closing unit, wherein:
the unit for generating a list of ports to be closed is arranged to collect determined unused universal ports and generate a list of ports to be closed;
the closing unit is arranged to close the unused universal ports in the access network device according to the generated list of ports to be closed.

10. The apparatus for reducing power consumption of an access network device of any one of claims 6 to 9, wherein, the closing unit is arranged to close the unused universal ports in the access network device as follows:
closing the unused universal ports in the open status in the access network device.

11. A computer program, comprising program instructions that, when executed by a terminal, cause the terminal to perform the method for reducing power consumption of an access network device of any one of claims 1 to 5.

12. A computer-readable data carrier, carrying the computer program of claim 11.

## Patentansprüche

1. Verfahren zur Reduzierung des Stromverbrauchs einer Netzwerkzugriffsvorrichtung, umfassend die folgenden Schritte:
Überwachen (S101, S401) des Datenverkehrs an Anschlüssen in der Netzwerkzugriffsvorrichtung;
Beurteilen (S102, S402), ob es entsprechend einem Ergebnis der Überwachung des Datenverkehrs an den Anschlüssen ungenutzte Anschlüsse in der Netzwerkzugriffsvorrichtung gibt;
Bestimmen (S103, S403), ob die ungenutzten Anschlüsse Universalanschlüsse sind, die nicht in dem Zahlenzuweisungsressourcen-Pool (302) gespeichert werden, wenn die Netzwerkzugriffsvorrichtung ungenutzte Anschlüsse aufweist;
wenn festgestellt wird, dass die ungenutzten Anschlüsse Universalanschlüsse sind, die nicht in dem Zahlenzuweisungsressourcen-Pool gespeichert werden, Schließen (S104, S404) der ungenutzten Universalanschlüsse in der Netzwerkzugriffsvorrichtung.

2. Verfahren zur Reduzierung des Stromverbrauchs einer Netzwerkzugriffsvorrichtung nach Anspruch 1, wobei der Schritt des Überwachens des Datenverkehrs an den Anschlüssen der Netzwerkzugriffsvorrichtung Folgendes umfasst:
Erfassen (S402), ob es Datenverkehr gibt, der an den Anschlüssen in der Netzwerkzugriffsvorrichtung durch Sammeln (S401) einer Anzahl von empfangenen und gesendeten Bytes an den Anschlüssen der Netzwerkzugriffsvorrichtung in einem voreingestellten Zeitraum erzeugt wird.

3. Verfahren zur Reduzierung des Stromverbrauchs einer Netzwerkzugriffsvorrichtung nach Anspruch 2, wobei der Schritt des Beurteilens, ob die Netzwerkzugriffsvorrichtung entsprechend einem Ergebnis der Überwachung des Datenverkehrs ungenutzte Anschlüsse aufweist, Folgendes umfasst:
Beurteilen, ob die Netzwerkzugriffsvorrichtung Anschlüsse aufweist, die keinen Datenverkehr erzeugen; und wenn es Anschlüsse gibt, die keinen Datenverkehr erzeugen, Festlegen, dass die Anschlüsse, die keinen Datenverkehr erzeugen, als ungenutzte Anschlüsse bestimmt werden, und Festlegen, dass die Netzwerkzugriffsvorrichtung ungenutzte Anschlüsse aufweist; wenn es keine ungenutzten Anschlüsse gibt, die keinen Datenverkehr erzeugen, Festlegen, dass es keine ungenutzten Anschlüsse in der Netzwerkzugriffsvorrichtung gibt.

4. Verfahren zur Reduzierung des Stromverbrauchs einer Netzwerkzugriffsvorrichtung nach Anspruch 3, wobei der Schritt des Schließens ungenutzter Universalanschlüsse in der Netzwerkzugriffsvorrichtung bei Feststellung, dass die ungenutzten Anschlüsse Universalanschlüsse sind, die nicht in dem Zahlenzuweisungsressourcen-Pool gespeichert sind, Folgendes umfasst:
Zählen der bestimmten ungenutzten Universalanschlüsse und Erzeugen einer Liste von zu schließenden Anschlüssen (S403);
Schließen der ungenutzten Universalanschlüsse in der Netzwerkzugriffsvorrichtung entsprechend der erzeugten Liste von zu schließenden Anschlüssen (S404).

5. Verfahren zur Reduzierung des Stromverbrauchs einer Netzwerkzugriffsvorrichtung nach Anspruch 1 bis 4, wobei der Schritt des Schließens der ungenutzten Universalanschlüsse in der Netzwerkzugriffsvorrichtung Folgendes umfasst:
Schließen der ungenutzten Universalanschlüsse in einem offenen Zustand in der Netzwerkzugriffsvorrichtung.

6. Vorrichtung zur Reduzierung des Stromverbrauchs einer Netzwerkzugriffsvorrichtung, umfassend ein Erfassungsmodul (201), ein Beurteilungsmodul (202), ein Bestimmungsmodul (203) und ein Schließmodul (204), wobei:
das Erfassungsmodul angeordnet ist, um den Datenverkehr an den Anschlüssen in der Netzwerkzugriffsvorrichtung zu überwachen;
das Beurteilungsmodul angeordnet ist, um zu beurteilen, ob die Netzwerkzugriffsvorrichtung ungenutzte Anschlüsse entsprechend einem Ergebnis der Überwachung des Datenverkehrs an den Anschlüssen aufweist;
das Bestimmungsmodul angeordnet ist, um zu beurteilen, ob die ungenutzten Anschlüsse Universalanschlüsse sind, die nicht in einem Zahlenzuweisungsressourcen-Pool (302) gespeichert werden, wenn die Netzwerkzugriffsvorrichtung ungenutzte Anschlüsse aufweist;
das Schließmodul angeordnet ist, um die ungenutzten Universalanschlüsse in der Netzwerkzugriffsvorrichtung zu schließen, wenn festgestellt wird, dass die ungenutzten Anschlüsse Universalanschlüsse sind, die nicht in dem Zahlenzuweisungsressourcen-Pool gespeichert sind.

7. Vorrichtung zur Reduzierung des Stromverbrauchs einer Netzwerkzugriffsvorrichtung nach Anspruch 6, wobei das Erfassungsmodul eine Erfassungseinheit umfasst, wobei:
die Erfassungseinheit angeordnet ist, um zu erfassen, ob die Anschlüsse in der Netzwerkzugriffsvorrichtung durch Sammeln einer Anzahl von empfangenen und gesendeten Bytes an den Anschlüssen der Netzwerkzugriffsvorrichtung in einem voreingestellten Zeitraum Datenverkehr erzeugen.

8. Vorrichtung zur Reduzierung des Stromverbrauchs einer Netzwerkzugriffsvorrichtung nach Anspruch 7, wobei das Beurteilungsmodul angeordnet ist, um zu beurteilen, ob die Netzwerkzugriffsvorrichtung entsprechend dem Ergebnis der Überwachung des Datenverkehrs an den Anschlüssen ungenutzte Anschlüsse aufweist, wie folgt:
Beurteilen, ob es Anschlüsse gibt, die keinen Datenverkehr an den Anschlüssen der Netzwerkzugriffsvorrichtung erzeugen, und wenn es Anschlüsse gibt, die keinen Datenverkehr erzeugen, Festlegen, dass die Anschlüsse, die keinen Datenverkehr erzeugen, als ungenutzte Anschlüsse bestimmt werden, und dass die Netzwerkzugriffsvorrichtung ungenutzte Anschlüsse aufweist; wenn es keine Anschlüsse gibt, die keinen Datenverkehr erzeugen, Festlegen, dass es keine ungenutzten Anschlüsse in der Netzwerkzugriffsvorrichtung gibt.

9. Vorrichtung zur Reduzierung des Stromverbrauchs einer Netzwerkzugriffsvorrichtung nach Anspruch 8, wobei das Schließmodul eine Einheit zum Erzeugen einer Liste von zu schließenden Anschlüssen und eine Schließeinheit umfasst, wobei:
die Einheit zum Erzeugen einer Liste von zu schließenden Anschlüssen angeordnet ist, um bestimmte ungenutzte Universalanschlüsse zu sammeln und eine Liste von zu schließenden Anschlüssen zu erzeugen;
die Schließeinheit angeordnet ist, um die ungenutzten Universalanschlüsse in der Netzwerkzugriffsvorrichtung entsprechend der erzeugten Liste von zu schließenden Anschlüssen zu schließen.

10. Vorrichtung zur Reduzierung des Stromverbrauchs einer Netzwerkzugriffsvorrichtung nach Anspruch 6 bis 9, wobei die Schließeinheit angeordnet ist, um die ungenutzten Universalanschlüsse in der Netzwerkzugriffsvorrichtung wie folgt zu schließen:
Schließen der ungenutzten Universalanschlüsse in dem offenen Zustand in der Netzwerkzugriffsvorrichtung.

11. Computerprogramm, umfassend Programmanweisungen, die bei Ausführung durch ein Endgerät bewirken, dass das Endgerät das Verfahrens zu Reduzierung des Stromverbrauchs einer Netzwerkzugriffsvorrichtung nach einem der Ansprüche 1 bis 5 ausführt.

12. Computerlesbarer Datenträger, welcher das Computerprogramm nach Anspruch 11 trägt.

## Revendications

1. Procédé pour réduire la consommation électrique d'un dispositif de réseau d'accès, comprenant les étapes suivantes :
surveiller (S101, S401) un trafic de données au niveau de ports dans le dispositif de réseau d'accès ;
juger (S102, S402) s'il existe des ports inutilisés existants dans le dispositif de réseau d'accès en fonction d'un résultat de surveillance du trafic de données au niveau des ports ;
déterminer (S103, S403) si les ports inutilisés sont des ports universels qui ne sont pas sauvegardés dans un groupement de ressources d'allocation de numéro (302) si le dispositif de réseau d'accès a les ports inutilisés ;
quand il est déterminé que les ports inutilisés sont des ports universels qui ne sont pas sauvegardés dans le groupement de ressources d'allocation de numéro, fermer (S104, S404) les ports inutilisés universels dans le dispositif de réseau d'accès.

2. Procédé pour réduire la consommation électrique d'un dispositif de réseau d'accès selon la revendication 1, dans lequel, l'étape de surveillance du trafic de données au niveau des ports dans le dispositif de réseau d'accès comprend :
détecter (S402) s'il existe un trafic de données généré au niveau des ports dans le dispositif de réseau d'accès en collectant (S401) un nombre d'octets d'entrée et de sortie au niveau des ports dans le dispositif de réseau d'accès dans une période de temps prédéfinie.

3. Procédé pour réduire la consommation électrique d'un dispositif de réseau d'accès selon la revendication 2, dans lequel, l'étape consistant à juger si le dispositif de réseau d'accès a des ports inutilisés en fonction d'un résultat de surveillance du trafic de données au niveau des ports comprend :
juger si le dispositif de réseau d'accès a des ports qui ne génèrent pas un trafic de données ; et s'il existe des ports ne générant pas un trafic de données, juger que les ports ne générant pas un trafic de données sont déterminés comme des ports inutilisés, et juger que le dispositif de réseau d'accès a des ports inutilisés ; s'il n'existe pas de ports qui ne génèrent pas un trafic de données, juger qu'il n'existe pas de ports inutilisés dans le dispositif de réseau d'accès.

4. Procédé pour réduire la consommation électrique d'un dispositif de réseau d'accès selon la revendication 3, dans lequel l'étape de fermeture de ports universels inutilisés dans le dispositif de réseau d'accès quand il est déterminé que les ports inutilisés sont des ports universels qui ne sont pas sauvegardés dans le groupement de ressources d'allocation de numéro comprend :
compter les ports universels inutilisés déterminés et la génération d'une liste de ports à fermer (S403) ;
fermer les ports universels inutilisés dans le dispositif de réseau d'accès en fonction de la liste de ports à fermer générée (S404).

5. Procédé pour réduire la consommation électrique d'un dispositif de réseau d'accès selon l'une quelconque des revendications 1 à 4, dans lequel, l'étape de fermeture des ports universels inutilisés dans le dispositif de réseau d'accès comprend :
fermer les ports universels inutilisés dans un état ouvert dans le dispositif de réseau d'accès.

6. Appareil pour réduire la consommation électrique d'un dispositif de réseau d'accès, comprenant un module de détection (201), un module de jugement (202), un module de détermination (203) et un module de fermeture (204), dans lequel :
le module de détection est agencé pour surveiller un trafic de données au niveau de ports dans le dispositif de réseau d'accès ;
le module de jugement est agencé pour juger si le dispositif de réseau d'accès a des ports inutilisés en fonction d'un résultat de surveillance d'un trafic de données au niveau des ports ;
le module de détermination est agencé pour juger si les ports inutilisés sont des ports universels qui ne sont pas sauvegardés dans un groupement de ressources d'allocation de numéro (302) si le dispositif de réseau d'accès a les ports inutilisés ;
le module de fermeture est agencé pour fermer les ports universels inutilisés dans le dispositif de réseau d'accès quand il est déterminé que les ports inutilisés sont des ports universels qui ne sont pas sauvegardés dans le groupement de ressources d'allocation de numéro.

7. Appareil pour réduire la consommation électrique d'un dispositif de réseau d'accès selon la revendication 6, dans lequel le module de détection comprend une unité de détection, dans lequel :
l'unité de détection est agencée pour détecter si les ports dans le dispositif de réseau d'accès génèrent un trafic de données en collectant un nombre d'octets d'entrée et de sortie au niveau des ports dans le dispositif de réseau d'accès dans une période de temps prédéfinie.

8. Appareil pour réduire la consommation électrique d'un dispositif de réseau d'accès selon la revendication 7, dans lequel, le module de jugement est agencé pour juger si le dispositif de réseau d'accès a des ports inutilisés en fonction du résultat de surveillance d'un trafic de données au niveau des ports comme suit :
juger s'il existe des ports qui ne génèrent pas un trafic de données dans les ports du dispositif de réseau d'accès, et s'il existe des ports qui ne génèrent pas un trafic de données, juger que les ports ne générant pas un trafic de données sont déterminés comme des ports inutilisés et le dispositif de réseau d'accès a des ports inutilisés ; s'il n'existe pas de ports qui ne génèrent pas un trafic de données, juger qu'il n'existe pas de ports inutilisés dans le dispositif de réseau d'accès.

9. Appareil pour réduire la consommation électrique d'un dispositif de réseau d'accès selon la revendication 8, dans lequel le module de fermeture comprend une unité pour générer une liste de ports à fermer et une unité de fermeture, dans lequel :
l'unité pour générer une liste de ports à fermer est agencée pour collecter des ports universels inutilisés déterminés et générer une liste de ports à fermer ;
l'unité de fermeture est agencée pour fermer les ports universels inutilisés dans le dispositif de réseau d'accès en fonction de la liste de ports à fermer générée.

10. Appareil pour réduire la consommation électrique d'un dispositif de réseau d'accès selon l'une quelconque des revendications 6 à 9, dans lequel l'unité de fermeture est agencée pour fermer les ports universels inutilisés dans le dispositif de réseau d'accès comme suit :
fermer les ports universels inutilisés dans l'état ouvert dans le dispositif de réseau d'accès.

11. Programme informatique comprenant des instructions de programme qui, quand elles sont exécutées par un terminal, amènent le terminal à réaliser le procédé pour réduire la consommation électrique d'un dispositif de réseau d'accès selon l'une quelconque des revendications 1 à 5.

12. Support de données lisible par ordinateur exécutant le programme informatique selon la revendication 11.
